# EUROPEAN PATENT SPECIFICATION

(11) **EP 2 469 072 B1**
(45) Date of publication and mention of the grant of the patent: **15.04.2015**
(21) Application number: 10197072.1
(22) Date of filing: 27.12.2010
(51) Int. Cl.: F03B 13/26, H02P 3/14, H02P 3/26

(54) **A hydroelectric turbine and method of braking the hydroelectric turbine**
Hydroelektrisches Turbinenbremssystem und Bremsverfahren der Turbine
Système de freinage de turbine hydroélectrique et methode de freinage de la turbine

(43) Date of publication of application: 27.06.2012
(73) Proprietor: Openhydro IP Limited, Dublin 2 (IE)
(72) Inventor: Ives, James, 2, Dublin (IE); Dunne, Paul, 9, Dublin (IE); Spooner, Edward, Bishop Auckland, Durham DL13 1SL (GB); Cawthorne, Simon, County Louth, Carlingford (IE)
(74) Representative: O'Neill, Brian

(56) References cited:
- EP-A1- 2 200 170
- EP-A2- 1 863 162
- WO-A2-2010/056956
- DE-B3-102009 011 784
- DE-U1-202006 012 200
- US-A- 2 338 053
- US-A1- 2009 278 351

## Description

### Field of the invention

This invention relates to a hydroelectric turbine braking system, and in particular a braking system which may be utilised to bring a rotor of a hydroelectric turbine to a stop in order to, for example, retrieve the turbine from the seabed for repair or replacement.

### Background of the invention

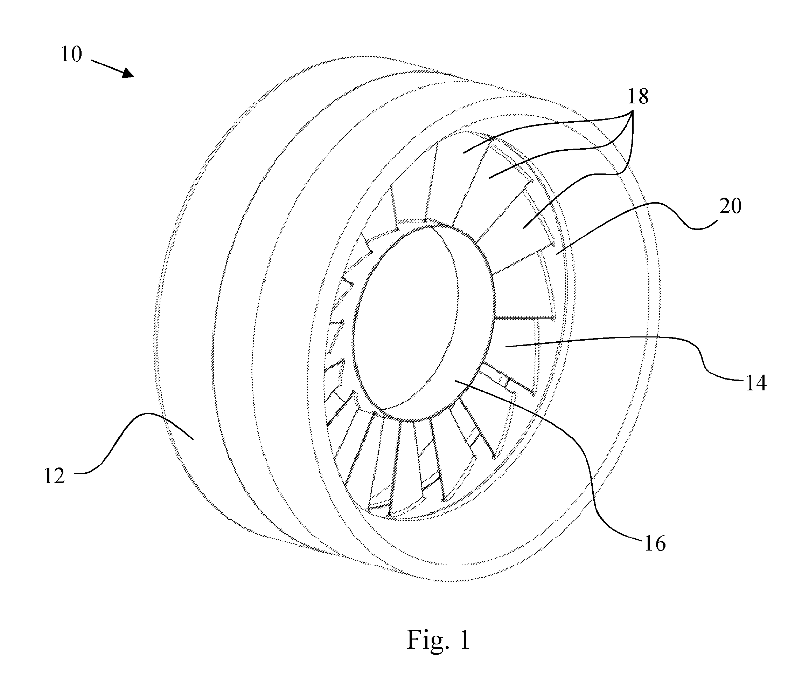

With reference to Fig. 1, a direct-drive shaftless permanent magnet hydroelectric turbine generator is shown. The turbine 10 comprises a ring-shaped stator 12 and a rotor 14, the stator 12 having a magnetic core and a plurality of coils (not shown) located about the circumference of the stator 12. The rotor 14 comprises an inner rim 16, which defines an open centre. The rotor 14 further comprises an array of generally radially extending blades 18 captured between the inner rim 16 and an outer rim 20. The rotor 14 also comprises an array of magnets (not shown) disposed about the outer rim 20. The stator 12 concentrically surrounds the rotor 14, with the plurality magnetic core providing a magnetic flux return path for the magnets.

In use the turbine 10 is positioned in an area of tidal flow, such that the motion of the seawater through the turbine 10 acts on the blades 18, resulting in rotation of the rotor 14 within the stator 12. The motion of the magnets relative to the coils of the stator 12 causes the magnetic field generated by the magnets to induce an EMF in each of the coils. These induced EMFs provide the electrical power output from the turbine 10.

In the case of a detected fault, or for maintenance purposes, it is often desirable to prevent rotation of the rotor 14 and so to immobilise the turbine 10. In addition, when installing the turbine 10 on the seabed and when connecting power cables (not shown) thereto, it is also important to ensure that the rotor 14 does not undergo rotation as this would result in the generation of electricity.

DE102009011784 relates to a method for the operation of an underwater power plant comprising a water turbine for purposes of absorbing kinetic energy from a flow of water; an electrical generator with converter feed, whose generator rotor is connected in a torsionally rigid manner with the water turbine, wherein the invention is characterised in that in normal operation a first frequency converter is used for purposes of converter feed, and in the braking operation at least one second frequency converter, or one component of a second frequency converter, is connected into the circuit and synchronised with the first frequency converter, in order to execute with the latter in a combined manner a converter feed to the electrical generator, which generates a generator torque braking the water turbine..

US2009278351 discloses a variable speed wind turbine having a doubly fed induction generator (DFIG), includes an exciter machine mechanically coupled to the DFIG and a power converter placed between a rotor of the DFIG and the exciter machine. Thus, the power converter is not directly connected to the grid avoiding the introduction of undesired harmonic distortion and achieving a better power quality fed into the utility grid. Moreover, the variable speed wind turbine includes a power control and a pitch regulation.

EP2200170 discloses an electrical braking system for use in an off-shore hydroelectric turbine generator. The braking system is operable to apply a short circuit across a portion of the coils in the generator, which results in an electrical load applied to the generator, causing a braking torque to act against the turbine torque produced by the motion of the rotor. As the generator is of a shaftless construction, there is no damage caused to the generator through the application of the short circuit. It is also described how the braking system may be controlled either locally or remotely, and how the system may act as part of a fault protection system.

Therefore, it is an object of the invention to provide a braking system for a hydroelectric turbine generator which allows for reliable operation with minimum maintenance.

### Summary of the invention

According to a first aspect of the present invention there is provided a method of braking a hydroelectric turbine comprising a stator, a rotor housed for rotation within the stator, and a permanent magnet generator having a plurality of conductive coils and a plurality of magnets arranged for relative motion through rotation of the rotor within the stator, the method comprising the steps of;
applying an electro-dynamic brake to the rotor;
subsequently applying a secondary brake to the rotor;
automatically applying the electro-dynamic brake and/or secondary brake in response to an event; characterised by
the electro-dynamic brake, responsive to a control signal, applying a resistive load or a short circuit across at least one of said plurality of coils, such that a current is induced in said at least one coil and an electrical load is applied to said permanent magnet generator, resulting in a braking torque being applied to the turbine.

Preferably, the method comprises applying the electro-dynamic brake and/or secondary brake in response to a fault affecting operation of the turbine.

Preferably, the method comprises applying the electro-dynamic brake and/or secondary brake when the rotational speed of the rotor drops below a predetermined limit.

Preferably, the secondary brake comprises a mechanical brake and/or an electric parking brake.

Preferably, the method comprises using a bearing surface of the rotor as a braking surface against which the mechanical brake is applied.

Preferably, the method comprises the step of mounting at least one disc to the rotor as a braking surface against which the mechanical brake is applied.

Preferably, the method comprises simultaneously applying a mechanical braking force to a pair of opposed braking surfaces of the rotor.

Preferably, the method comprises hydraulically and/or electrically actuating the mechanical brake.

Preferably, the method comprises the step of storing energy generated by the turbine to effect the braking.

According to a second aspect of the present invention there is provided a hydroelectric turbine comprising a stator, a rotor housed for rotation within the stator, and a permanent magnet generator having a plurality of conductive coils and a plurality of magnets arranged for relative motion through rotation of the rotor within the stator; an electro-dynamic brake; and a secondary brake operable to engage the rotor after the electro-dynamic brake has been engaged; and a controller operable to automatically engage the electro-dynamic brake and/or secondary brake in response to an event; characterised in that
the electro-dynamic brake, responsive to a control signal, is operable to apply a resistive load or a short circuit across at least one of said plurality of coils, such that a current is induced in said at least one coil and an electrical load is applied to said permanent magnet generator, resulting in a braking torque being applied to the turbine.

Preferably, the electro-dynamic brake comprises a contactor adapted to be connected across output terminals of the turbine, and wherein said contactor is controlled by a control signal.

Preferably, the electro-dynamic brake comprises an electrical switching device and an actuator circuit to actuate said electrical switching device, wherein said actuator circuit is controlled by a control signal.

Preferably, the turbine comprises an energy store chargeable by the turbine and operable to power the electro-dynamic and/or secondary brake.

Preferably, the secondary brake comprises a mechanical brake and/or an electric parking brake.

Preferably, the electric parking brake, responsive to a control signal, is operable to apply a direct current to at least one of said plurality of coils, such that a magnetic field is produced by said at least one coil and a magnetic torque is applied to the rotor of said permanent magnet generator, resulting in a braking torque being applied to the turbine.

Preferably, at least one of the plurality of conductive coils of the permanent magnet generator is formed by a conductor comprising a plurality of parallel wires, and wherein the electric parking brake is operable to apply said direct current to at least one of said plurality of parallel wires.

Preferably, the electric parking brake comprising a contactor adapted to connect the direct current source across output terminals of the turbine, and wherein said contactor is controlled by a control signal.

### Brief description of the drawings

Figure 1 illustrates a perspective view of a hydroelectric turbine according to an embodiment of the present invention;
Figure 2 illustrates a sectioned side elevation of the turbine illustrated in Figure 1;
Figure 3 illustrates an enlarged view of a portion of the turbine of Figures 1 and 2;
Figure 4 illustrates a sectioned side elevation of alternative embodiment of a hydroelectric turbine according to the present invention;
Figure 5 illustrates a sectioned side elevation of a further alternative embodiment of a hydroelectric turbine according to the present invention;
Figure 6 illustrates a circuit diagram of an electro-dynamic brake and an electric parking brake forming part of a hydroelectric turbine according to the present invention; and
Figure 7 illustrates a circuit diagram of an alternative electro-dynamic brake and electric parking brake forming part of a hydroelectric turbine according to the present invention.

### Detailed description of the drawings

Referring now to Figures 1 to 3 of the accompanying drawings there is illustrated a first embodiment of a hydroelectric turbine according to the present invention, generally indicated as 10, which is operable to generate electrical power in response to the tidal flow of water through the turbine 10. In particular the turbine 10 comprises a stator 12 within which is housed for rotating a rotor 14. The rotor 14 comprises an inner rim 16 defining an open centre, and a circular array of blades 18 which are encapsulated between the inner rim 16 and an outer rim 20. The outer rim 20 is itself contained within a channel defined within the stator 12, with a small water gap 22 being provided between the outer rim 20 and the stator 12. The turbine 10 further comprises a permanent magnet generator (not shown) which comprises an array of permanent magnets mounted circumferentially about the outer rim 20, and a corresponding array of coils (not shown) provided circumferentially about the stator 12 across the gap 22. In this way as the tidal flow of water passes through the turbine 10, and in particular flows past the blades 18, the rotor 14 will be forced to undergo rotation relative to the stator 12. Thus the magnets undergo displacement relative to the coils, causing the magnetic field generated by the magnets to induce an EMF in each of the coils such that electrical power output is provided from the turbine 10.

The turbine 10 further comprises a secondary brake in the form of a mechanical brake 24 which in the embodiment illustrated comprises a pair of disc rotors 26, one being secured to each of a pair of lateral faces 28 of the outer rim 20. In the embodiment illustrated each disc rotor 26 projects radially beyond the outer rim 20 to project into the gap 22. The brake 24 further comprises a pair of brake callipers 30 associated with each disc rotor 26, each calliper 30 carrying a brake pad 32 which may be displaced from the calliper 30 towards and into contact with the respective disc rotor 26. In the embodiment illustrated the callipers 30 are mounted to the stator 12 and project into the gap 22. The exposed outer extremity of each disc rotor 26 is therefore located between a respective pair of the callipers 30. In this way the callipers 30 may be actuated in order to displace the pads 32 into contact with the disc rotor 26 in order to effect mechanical braking of the turbine rotor 14. The brake 24 may be mechanically/hydraulically/electrically actuated. In addition the turbine 10 may comprise an energy store (not shown) which is capable of storing energy generated by the operation of the turbine 10, to be used in the actuation of the mechanical brake 24.

The turbine 10 further comprises an electro-dynamic brake (not shown) which is operable through electrical means to apply a braking force to the rotor 14. The electro-dynamic brake may take a number of forms, and in a preferred embodiment is operable to apply a short circuit across one or more, and preferably all of the coils (not shown) of the generator. In this way a current is induced in those coils and a load is then applied to the permanent magnet generator of the turbine 10, resulting in a braking torque being applied to the rotor 14. It will of course be appreciated by a person skilled in the art that the electro-dynamic brake may be implemented through a number of other alternative arrangements.

Turning then to the operation of the turbine 10, the electro-dynamic brake (not shown) and the mechanical brake 24 may be remotely triggered, or maybe locally triggered, for example automatically and in response to some event, for example a fault which might otherwise lead to additional damage to the turbine 10 were the turbine 10 to continue generating electricity through rotation of the rotor 14. Similarly the electro-dynamic brake and mechanical brake 24 may be triggered as a one off actuation in the event of a complete loss of power, the energy store (not shown) then being utilised to provide power to effect operation of the electro-dynamic brake and/or the secondary mechanical brake. Similarly, the electro-dynamic brake and mechanical brake 24 could be used to stop rotation of the rotor 14 during periods of low rotational speed, as this will save on the bearing life of the turbine 10, as at low speeds there is very little power generated by the turbine 10. Thus the turbine 10 could be provided with one or more sensors (not shown) operable to detect when the speed of rotation of the rotor 14 drops below a predetermined level, or when the power output of the turbine 10 drops below a predetermined level, and to actuate the electro-dynamic brake and/or mechanical brake 24. Conversely the brakes can be released when, for example, a predetermined lower limit of tidal speed has been passed.

The turbine 10 is preferably configured, when the rotor 14 is to be brought to a halt, to initially actuate the electro-dynamic brake in order to begin slowing the rotor 14. Once the rotor 14 has been suitably slowed the turbine 10, for example through suitable control circuitry (not shown), can then actuate the secondary mechanical brake 24 in order to clamp the disc rotors 26 between the brake pads 32 and bring the rotor 14 to a halt. In this way the electro-dynamic brake will effect an initial slowing of the rotor 14, before the mechanical brake 24 fully halts rotation of the rotor 14. In this way the use of the mechanical brake 24 is minimised. Once the rotor 14 has been halted the turbine 10 is no longer generating electricity, and it is then safe to retrieve/repair the turbine 10 as required.

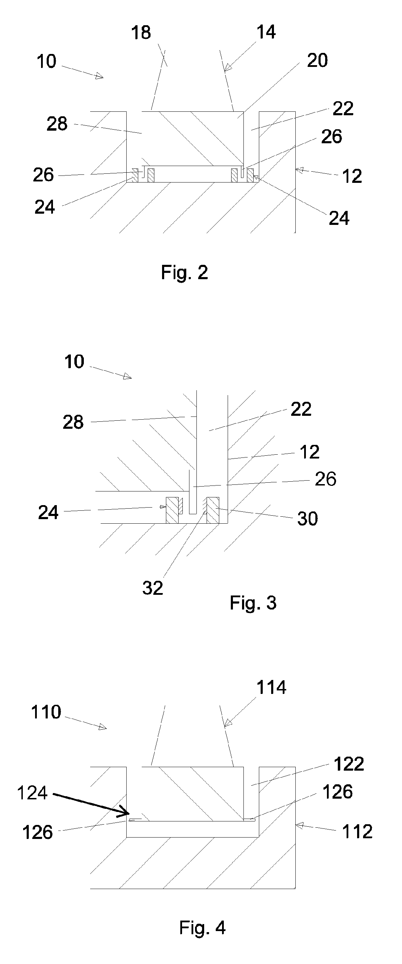

Referring now to Figure 4 there is illustrated an alternative embodiment of a hydroelectric turbine according to the present invention, generally indicated as 110. In this embodiment like components have been accorded like reference numerals, and unless otherwise stated perform a like function. The turbine 110 comprises a stator 112 and a rotor 114. The rotor 14 is spaced, in both the radial and axially directions, from the stator 112 by a water gap 122. The turbine 110 additionally comprises a secondary mechanical brake 124 which comprises a pair of axially extending flanges 126, each extending from a respective lateral face 128 of the rotor 114. Although not illustrated, the turbine 110 further comprises two pairs of brake callipers (not shown) positioned to be capable of clamping the respective flange 126 therein, similar to the disc rotors 26 of the first embodiment.

The turbine 110 further comprises an electro-dynamic brake (not shown) which, as described with reference to the first embodiment, is operable in conjunction with the secondary mechanical brake 124 in order to bring the rotor 114 to a halt as required.

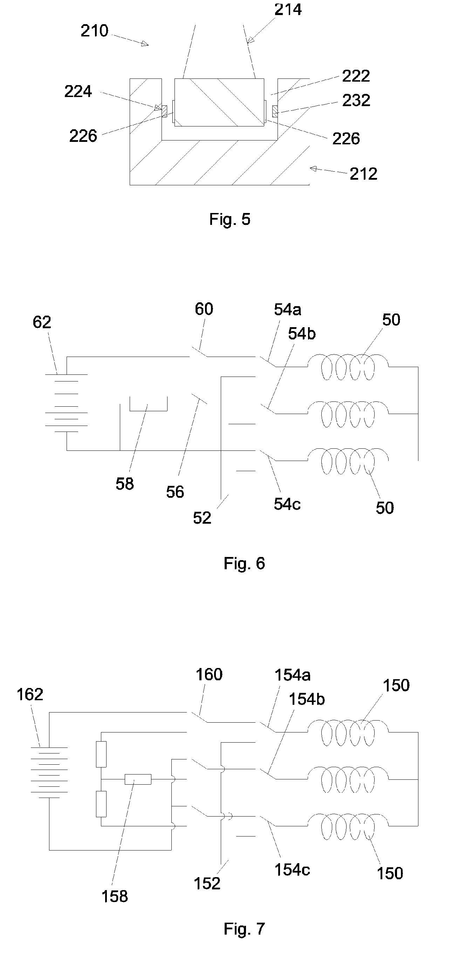

Referring to Figure 5, there is illustrated a further alternative embodiment of a hydroelectric turbine, generally indicated as 210. In this embodiment like components have been accorded like reference numerals, and unless otherwise stated perform the like function. The turbine 210 comprises a stator 212 housing a rotor 214 for rotation therein. The stator 212 and rotor 214 are spaced from one another by a gap 222. The turbine 210 comprises a secondary mechanical brake 224 which comprises a pair of braking surfaces in the form of a braking rims 226 mounted to each of a pair of lateral faces of the rotor 214. A pair of corresponding brake pads 232 are provided mounted to the stator 212 in opposition to the pair of braking rims 226. The brake pads 232 can thus be displaced into and out of contact with the rim brakes 226 in order to effect mechanical braking of the rotor 214 as herein before described. In addition the turbine 210 comprises an electro-dynamic brake (not shown) as with the first and second embodiments described above.

Referring now to Figure 6, there is illustrated a simple electrical circuit for an electro-dynamic brake in combination with a secondary brake in the form of an electrical parking brake which may form part of any one of the turbines 10; 110; 210 hereinbefore described. A plurality of coils 50 are connected to form a three-phase winding connected to a load 52. When a signal is received initiating the braking sequence, switch contacts 54a, 54b, 54c are switched to disconnect the load 52 and connect the winding to the braking circuit. A contact 56 is closed if the rotational speed of the turbine rotor (not shown) is higher than the threshold for electro-dynamic braking. A load resistor 58 or a short circuit is connected across two of the generator terminals. When the speed has reduced to a low value, a contact 60 is closed and direct current from an energy store in the form of a dc source 62 operates the secondary electrical parking brake.

Referring to Figure 7, there is illustrates a simple electrical circuit for an alternative electro-dynamic brake in combination with a secondary brake in the form of an electrical parking brake which may form part of any one of the turbines 10; 110; 210 hereinbefore described. In this alternative embodiment like components have been accorded like reference numerals, and unless otherwise stated perform a like function. A plurality of coils 150 are connected to form a three-phase winding connected to a load 152 via switch contacts 154a, 154b, 154c which may be switched to disconnect the load 152 and connect the winding to the braking circuit. In this embodiment the entire three-phase windings are utilised to maximise effort in braking the rotating turbine (not shown). There are two braking options depending on the circumstances, either via a load resistor 158 or a direct current energy source 162. When the speed of the turbine (not shown) has reduced to a low value, a contact 160 is closed and direct current from the dc source 162 operates the electrical parking brake. The load resistor option comprises connecting the load resistor 158 across each phase of the generator or alternatively the phase terminals can be short circuited. The direct current energy source option involves feeding current into one phase of the generator which returns via the other two phases.

A wide range of alternative switch arrangements is possible including systems employing solid-state contactors. The dc source 62, 162 shown as an energy storage battery, would need to be charged during normal operation of the generator and to have sufficient capacity to provide the current for the maximum anticipated period of parking.

The turbine 10, 110, 210 of the present invention thus permits the rotor 14, 114, 214 to be brought to a halt, preferably through the initial application of an electro-dynamic brake, to be followed by a secondary mechanical brake 24, 124, 224 and/or a secondary electric parking brake. In this way the consumable components, namely those of the mechanical brake 24, 124, 224 are not required to perform the entire braking operation, and are only utilised once the rotor 14, 114, 214 has been slowed considerably. In this way the consumable components will experience significantly reduced stress and wear, thus prolonging the working life thereof.

## Claims

1. A method of braking a hydroelectric turbine (10, 110, 210) comprising a stator (12, 112, 212), a rotor (14, 114, 214) housed for rotation within the stator, and a permanent magnet generator having a plurality of conductive coils and a plurality of magnets arranged for relative motion through rotation of the rotor within the stator, the method comprising the steps of;
applying an electro-dynamic brake to the rotor;
subsequently applying a secondary brake (24, 124, 224) to the rotor;
automatically applying the electro-dynamic brake and/or secondary brake in response to an event;
**characterised by**
the electro-dynamic brake, responsive to a control signal, applying a resistive load or a short circuit across at least one of said plurality of coils, such that a current is induced in said at least one coil and an electrical load is applied to said permanent magnet generator, resulting in a braking torque being applied to the turbine.

2. A method according to claim 1 comprising applying the electro-dynamic brake and/or secondary brake in response to a fault affecting operation of the turbine.

3. A method according to claim 1 comprising applying the electro-dynamic brake and/or secondary brake when the rotational speed of the rotor drops below a predetermined limit.

4. A method according to any preceding claim in which the secondary brake comprises a mechanical brake and/or an electric parking brake.

5. A method according to claim 4 comprising using a bearing surface of the rotor as a braking surface against which the mechanical brake is applied.

6. A method according to claim 4 or 5 comprising the step of mounting at least one disc (26, 126, 226) to the rotor as a braking surface against which the mechanical brake is applied.

7. A method according to any preceding claim comprising the step of storing energy generated by the turbine to effect the braking.

8. A hydroelectric turbine (10, 110, 210) comprising a stator (12, 112, 212), a rotor (14, 114, 214) housed for rotation within the stator, and a permanent magnet generator having a plurality of conductive coils and a plurality of magnets arranged for relative motion through rotation of the rotor within the stator; an electro-dynamic brake; and a secondary brake (24, 124, 224) operable to engage the rotor after the electro-dynamic brake has been engaged; and a controller operable to automatically engage the electro-dynamic brake and/or secondary brake in response to an event;
**characterised in that**
the electro-dynamic brake, responsive to a control signal, is operable to apply a resistive load or a short circuit across at least one of said plurality of coils, such that a current is induced in said at least one coil and an electrical load is applied to said permanent magnet generator, resulting in a braking torque being applied to the turbine.

9. A hydroelectric turbine according to any of claims 8 in which the electro-dynamic brake comprises a contactor adapted to be connected across output terminals of the turbine, and wherein said contactor is controlled by a control signal.

10. A hydroelectric turbine according to claim 8 or 9 in which the electro-dynamic brake comprises an electrical switching device and an actuator circuit to actuate said electrical switching device, wherein said actuator circuit is controlled by a control signal.

11. A hydroelectric turbine according to any of claims 8 to 10 comprising an energy store chargeable by the turbine and operable to power the electro-dynamic and/or secondary brake.

12. A hydroelectric turbine according to any of claims 8 to 11 in which the secondary brake comprises a mechanical brake and/or an electric parking brake.

## Patentansprüche

1. Verfahren zum Bremsen einer hydroelektrischen Turbine (10, 110, 210), umfassend einen Stator (12, 112, 212), einen Rotor (14, 114, 214), der zur Drehung in dem Stator untergebracht ist, und einen Permanentmagnet-Stromerzeuger mit mehreren leitfähigen Spulen und mehreren Magneten, die zur Relativbewegung durch Drehung des Rotors in dem Stator angeordnet sind, wobei das Verfahren folgende Schritte umfasst:
Anlegen einer elektrodynamischen Bremse an den Rotor;
anschließendes Anlegen einer Sekundärbremse (24, 124, 224) an den Rotor;
automatische Anlegen der elektrodynamischen Bremse und/oder der Sekundärbremse als Reaktion auf ein Ereignis; **dadurch gekennzeichnet, dass**
die elektrodynamische Bremse als Reaktion auf ein Steuersignal eine ohmsche Last oder einen Kurzschluss an mindestens eine der mehreren Spulen anlegt, so dass ein Strom in der mindestens einen Spule induziert wird und eine elektrische Last an den Permanentmagnet-Stromerzeuger angelegt wird, was dazu führt, dass ein Bremsmoment an die Turbine angelegt wird.

2. Verfahren nach Anspruch 1, umfassend das Anlegen der elektrodynamischen Bremse und/oder der Sekundärbremse als Reaktion darauf, dass ein Fehler den Betrieb der Turbine beeinflusst.

3. Verfahren nach Anspruch 1, umfassend das Anlegen der elektrodynamischen Bremse und/oder der Sekundärbremse, wenn die Drehzahl des Rotors unter eine vorherbestimmte Grenze fällt.

4. Verfahren nach einem der vorangehenden Ansprüche, wobei die Sekundärbremse eine mechanische Bremse und/oder eine elektrische Feststellbremse umfasst.

5. Verfahren nach Anspruch 4, umfassend das Verwenden einer Auflagefläche des Rotors als Bremsfläche, an der die mechanische Bremse angelegt wird.

6. Verfahren nach Anspruch 4 oder 5, umfassend den Schritt des Anbringens mindestens einer Scheibe (26, 126, 226) an dem Rotor als Bremsfläche, an der die mechanische Bremse angelegt wird.

7. Verfahren nach einem der vorangehenden Ansprüche, umfassend den Schritt des Speichems von von der Turbine erzeugter Energie, um das Bremsen zu bewirken.

8. Hydroelektrische Turbine (10, 110, 210), umfassend einen Stator (12, 112, 212), einen Rotor (14, 114, 214), der zur Drehung in dem Stator untergebracht ist, und einen Permanentmagnet-Stromerzeuger mit mehreren leitfähigen Spulen und mehreren Magneten, die zur Relativbewegung durch Drehung des Rotors in dem Stator angeordnet sind; eine elektrodynamische Bremse; und eine Sekundärbremse (24, 124, 224), die wirksam ist, um mit dem Rotor in Eingriff zu treten, nachdem die elektrodynamische Bremse in Eingriff gebracht wurde; und einen Kontroller, der wirksam ist, um die elektrodynamische Bremse und/oder die Sekundärbremse als Reaktion auf ein Ereignis automatisch in Eingriff zu bringen; **dadurch gekennzeichnet, dass**
die elektrodynamische Bremse als Reaktion auf ein Steuersignal wirksam ist, um eine ohmsche Last oder einen Kurzschluss an mindestens eine der mehreren Spulen anzulegen, so dass ein Strom in der mindestens einen Spule induziert wird und eine elektrische Last an den Permanentmagnet-Stromerzeuger angelegt wird, was dazu führt, dass ein Bremsmoment an die Turbine angelegt wird.

9. Hydroelektrische Turbine nach Anspruch 8, wobei die elektrodynamische Bremse ein Schaltschütz umfasst, das dazu angepasst ist, an Ausgangsklemmen der Turbine angeschlossen zu werden und wobei das Schaltschütz von einem Steuersignal gesteuert wird.

10. Hydroelektrische Turbine nach Anspruch 8 oder 9, wobei die elektrodynamische Bremse eine elektrische Schaltvorrichtung und eine Aktorschaltung zum Betätigen der elektrischen Schaltvorrichtung umfasst, wobei die Aktorschaltung von einem Steuersignal gesteuert wird.

11. Hydroelektrische Turbine nach einem der Ansprüche 8 bis 10, umfassend einen Energiespeicher, der von der Turbine geladen werden kann und wirksam ist, um die elektrodynamische und/oder die Sekundärbremse anzutreiben.

12. Hydroelektrische Turbine nach einem der Ansprüche 8 bis 11, wobei die Sekundärbremse eine mechanische Bremse und/oder eine elektrische Feststellbremse umfasst.

## Revendications

1. Procédé de freinage d'une turbine hydroélectrique (10, 110, 210) comportant un stator (12, 112, 212), un rotor (14, 114, 214) logé à des fins de rotation à l'intérieur du stator, et une génératrice à aimants permanents ayant une pluralité de bobines conductrices et une pluralité d'aimants agencés à des fins de mouvement relatif par le biais de la rotation du rotor à l'intérieur du stator, le procédé comportant les étapes consistant à :
serrer un frein électrodynamique sur le rotor ;
serrer, par la suite, un frein secondaire (24, 124, 224) sur le rotor ;
serrer automatiquement le frein électrodynamique et/ou le frein secondaire en réponse à un événement ;
**caractérisé par**
le frein électrodynamique, en réponse à un signal de commande, appliquant une charge résistive ou un court-circuit au niveau d'au moins l'une de ladite pluralité de bobines, de telle sorte qu'un courant est induit dans ladite au moins une bobine et une charge électrique est appliquée sur ladite génératrice à aimants permanents, résultant en l'application d'un couple de freinage sur la turbine.

2. Procédé selon la revendication 1, comportant l'étape consistant à serrer le frein électrodynamique et/ou le frein secondaire en réponse à une panne affectant le fonctionnement de la turbine.

3. Procédé selon la revendication 1, comportant l'étape consistant à serrer le frein électrodynamique et/ou le frein secondaire quand la vitesse de rotation du rotor tombe en-dessous d'une limite prédéterminée.

4. Procédé selon l'une quelconque des revendications précédentes, dans lequel le frein secondaire comporte un frein mécanique et/ou un frein de parc électrique.

5. Procédé selon la revendication 4, comportant l'étape consistant à utiliser une surface d'appui du rotor comme surface de freinage contre laquelle le frein mécanique est serré.

6. Procédé selon la revendication 4 ou la revendication 5, comportant l'étape consistant à monter au moins un disque (26, 126, 226) sur le rotor comme surface de freinage contre laquelle le frein mécanique est serré.

7. Procédé selon l'une quelconque des revendications précédentes, comportant l'étape consistant à stocker l'énergie générée par la turbine à des fins de freinage.

8. Turbine hydroélectrique (10, 110, 210) comportant un stator (12, 112, 212), un rotor (14, 114, 214) logé à des fins de rotation à l'intérieur du stator, et une génératrice à aimants permanents ayant une pluralité de bobines conductrices et une pluralité d'aimants agencés à des fins de mouvement relatif par le biais de la rotation du rotor à l'intérieur du stator ; un frein électrodynamique ; et un frein secondaire (24, 124, 224) servant à des fins de mise en prise avec le rotor une fois que le frein électrodynamique a été mis en prise ; et un dispositif de commande servant à mettre automatiquement en prise le frein électrodynamique et/ou le frein secondaire en réponse à un événement ;
**caractérisée en ce que**
le frein électrodynamique, en réponse à un signal de commande, sert à appliquer une charge résistive ou un court-circuit au niveau d'au moins l'une de ladite pluralité de bobines, de telle sorte qu'un courant est induit dans ladite au moins une bobine et une charge électrique est appliquée sur ladite génératrice à aimants permanents, résultant en l'application d'un couple de freinage sur la turbine.

9. Turbine hydroélectrique selon la revendication 8, dans laquelle le frein électrodynamique comporte un contacteur adapté à des fins de connexion au niveau des bornes de sortie de la turbine, et dans laquelle ledit contacteur est commandé par un signal de commande.

10. Turbine hydroélectrique selon la revendication 8 ou la revendication 9, dans laquelle le frein électrodynamique comporte un dispositif de commutation électrique et un circuit actionneur permettant d'actionner ledit dispositif de commutation électrique, dans laquelle ledit circuit actionneur est commandé par un signal de commande.

11. Turbine hydroélectrique selon l'une quelconque des revendications 8 à 10, comportant un accumulateur d'énergie chargeable par la turbine et pouvant servir à alimenter le frein électrodynamique et/ou le frein secondaire.

12. Turbine hydroélectrique selon l'une quelconque des revendications 8 à 11, dans laquelle le frein secondaire comporte un frein mécanique et/ou un frein de parc électrique.
